Europäisches Patentamt

European Patent Office

Office européen des brevets

(11) Veröffentlichungsnummer: **0 369 120**
**A1**

## (12) EUROPÄISCHE PATENTANMELDUNG

(21) Anmeldenummer: 89114953.6

(22) Anmeldetag: 12.08.89

(51) Int. Cl.5: **B23D 61/02**

(30) Priorität: 17.11.88 DE 8814351 U

(43) Veröffentlichungstag der Anmeldung:
23.05.90 Patentblatt 90/21

(84) Benannte Vertragsstaaten:
AT BE CH DE ES FR GB IT LI NL SE

(71) Anmelder: AKE KNEBEL GMBH + CO.
WERKZEUGFABRIK
Hölzlestrasse 14 + 16
D-7460 Balingen-Engstlatt(DE)

(72) Erfinder: Knebel, Albert
Hölzlestrasse 14
D-7460 Balingen-Engstlatt(DE)

(74) Vertreter: Möbus, Rudolf, Dipl.-Ing.
Hindenburgstrasse 65
D-7410 Reutlingen(DE)

(54) Kreissägeblatt.

(57) Im Körper (10) des Sägeblattes sind mittels Laserstrahl Durchgangsschlitze (14 - 16) angebracht, die Stege (17, 18) begrenzen. Mittels in Durchgangsöffnungen des Sägeblattkörpers eingesetzte Spreizkörper (20) sind die Stege bereichsweise gegeneinander oder gegen den angrenzenden Sägeblattkörperbereich gedrückt, wodurch eine starke Geräuschdämpfung erreicht wird.

Fig.1

EP 0 369 120 A1

## Kreissägeblatt

Die Neuerung betrifft ein Kreissägeblatt mit entlang seines Außenrandes ausgebildeten Zähnen.

Hochtourig betriebene Kreissägeblätter erzeugen beim Sägen starke hochfrequente Töne, die eine enorme Geräuschbelästigung der Umwelt bedeuten und zu bleibenden Gehörschäden führen können. Man hat daher bereits Lösungen angestrebt und auch gefunden, mit denen der Aufbau von die Geräusche verursachenden Schwingungen im Sägeblattkörper stark vermindert werden kann. So sind Zwillings-Sägeblätter bekannt, die unter Zwischenlage einer Dämpfungsschicht koaxial miteinander verbunden sind. Außerdem ist es bekannt, die Kreissägeblätter beidseitig mit einer dämpfenden Kunststoffbeschichtung zu versehen. Diese bekannten Maßnahmen haben aber den Nachteil, daß sie die Herstellung der Kreissägeblätter stark verteuern und auch den Einsatzbereich in Bezug auf Sägeschnittbreite oder Sägblatterwärmung einschränken.

Der Neuerung liegt die Aufgabe zugrunde, ein Kreissägeblatt preisgünstig schwingungsgedämpft auszubilden, ohne daß dadurch sein Einsatzbereich geschmälert wird.

Die gestellte Aufgabe wird mit einem Kreissägeblatt gelöst, bei welchem im Sägeblattkörper durch benachbarte und mittels Laserstrahl erzeugte dünne Durchgangsschlitze Stege gebildet sind, die mittels mindestens eines Spreizkörpers bereichsweise in gegenseitige Anlage oder Anlage gegen den angrenzenden Sägeblattkörperbereich gezwungen sind.

Zwar ist es bereits bekannt, in Kreissägeblättern Durchgangsschlitze auszubilden, um die Wärmedehnungsfähigkeit bei der Erwärmung der Kreissägeblätter im Betrieb zu begünstigen und einer Bruchgefahr vorzubeugen. Mit diesen Durchgangsschlitzen läßt sich jedoch keine wesentliche Geräuschminderung erzielen, weil keine gezielte Berührung der Schlitzränder erreicht wird, durch welche erst eine Schwingungsdämpfungswirkung im Sägeblattkörper erreicht wird. Bei dem Kreissägeblatt gemäß der Neuerung wird durch die Spreizkörper eine Dämpfungsberührung der Schlitzränder auch dann noch gewährleistet, wenn durch Wärmedehnung oder mechanische Belastung des Kreissägeblattes im Betrieb an den durch die Spreizkörper vorgespannten Stellen normalerweise keine dämpfungswirksame Berührung der Schlitzränder mehr vorhanden wäre.

Die Durchgangsschlitze können sich vorteilhafterweise jeweils über einen bestimmten Radialbereich des Sägeblattkörpers erstrecken und im Sägeblattkörper enden. Dabei müssen die Durchgangsschlitze aber nicht ausschließlich in radialer Richtung oder annähernd radial verlaufen, sondern können auch Abschnitte aufweisen, die stärker in Umfangsrichtung des Kreissägeblattes verlaufen. Zwar sind die Ränder solcher Schlitzabschnitte durch die auftretenden Zentrifugalkräfte und Wärmedehnungskomponenten stärker geneigt, sich voneinander zu entfernen, doch läßt sich diese Tendenz durch in diesen Abschnitten gesetzte Spreizkörper wirkungslos machen. Versuche haben gezeigt, daß durch unterschiedliche Schlitzführungen die Dämpfungswirkung auf bestimmte Frequenzbereiche konzentriert werden kann.

Als Spreizkörper können zweckmäßig Niete verwendet werden, die in Durchgangsöffnungen des Sägeblattkörpers eingesetzt sind, wobei diese Durchgangsöffnungen von einem der gebildeten Durchgangsschlitze gekreuzt oder tangiert werden. Die Anzahl der benachbarten Durchgangsschlitze kann unterschiedlich sein. In jedem Fall sollten die durch die Durchgangsschlitze gebildeten Stege und die Spreizkörper einzeln oder zu Gruppen in gleichen Abmessungen und gleichmäßig über den Umfang des Sägeblattkörpers verteilt angeordnet sein, um den Sägeblattkörper gleichmäßig zu beeinflussen und um Unwuchten im Sägeblattkörper zu vermeiden.

Nachfolgend werden zwei Ausführungsbeispiele von Kreissägeblättern gemäß der Neuerung anhand der beiliegenden Zeichnung näher erläutert.

Es zeigen:

Fig. 1 eine Teilaufsicht auf ein mit Dämpfungsstegen versehenes Kreissägeblatt;

Fig. 2 eine Teilaufsicht eines Kreissägeblattes im Bereich eines ausgebildeten Dämpfungssteges.

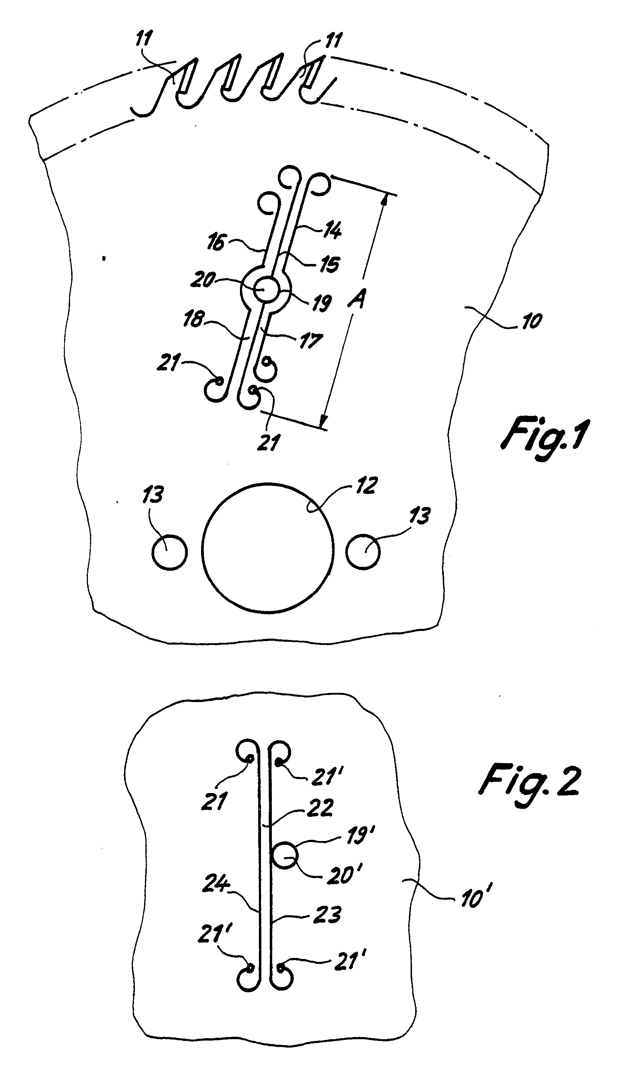

Fig. 1 zeigt einen Teil eines Kreissägeblattes 10, an dessen Außenrand Sägezähne 11 ausgebildet sind und das eine zentrale Lageröffnung 12 für eine Antriebswelle und Befestigungsöffnungen 13 aufweist. Zwi.schen der zentralen Lageröffnung 12 und dem äußeren Sägezahnbereich sind im Sägeblattkörper drei weitgehend parallel mit Abstand voneinander verlaufende dünne Durchgangsschlitze 14, 15 und 16 mittels eines Laserstrahles angebracht, die zwischen sich zwei Stege 17 und 18 begrenzen. Der mittlere Schlitz 15 kreuzt eine Durchgangsbohrung 19, in welche ein Niet 20 eingesetzt ist. Durch den Niet werden die beiden Stege 17 und 18 im Nietbereich gegen die angrenzenden Bereiche des Sägeblattkörpers gedrückt, von denen sie durch die äußeren Durchgangsschlitze 14 und 16 getrennt worden sind.

Die beiden Stege 17 und 18 und die sie begrenzenden Durchgangsschlitze 14, 15 und 16 verlaufen bei dem dargestellten Ausführungsbeispiel weitgehend geradlinig und etwas schräg zu einer Radialen des Kreissägeblattes 10 über einen Radialbereich A. An ihren Enden sind die Schlitze 14-16 schneckenartig einwärtsgebogen, so daß ihre Enden, die zu Löchern 21 erweitert sein können, auf den eigenen Schlitz gerichtet sind. Über den Umfang des Kreissägeblattes 10 sind in gleichmäßiger Verteilung und in gleicher Ausbildung weitere Steggruppen angeordnet.

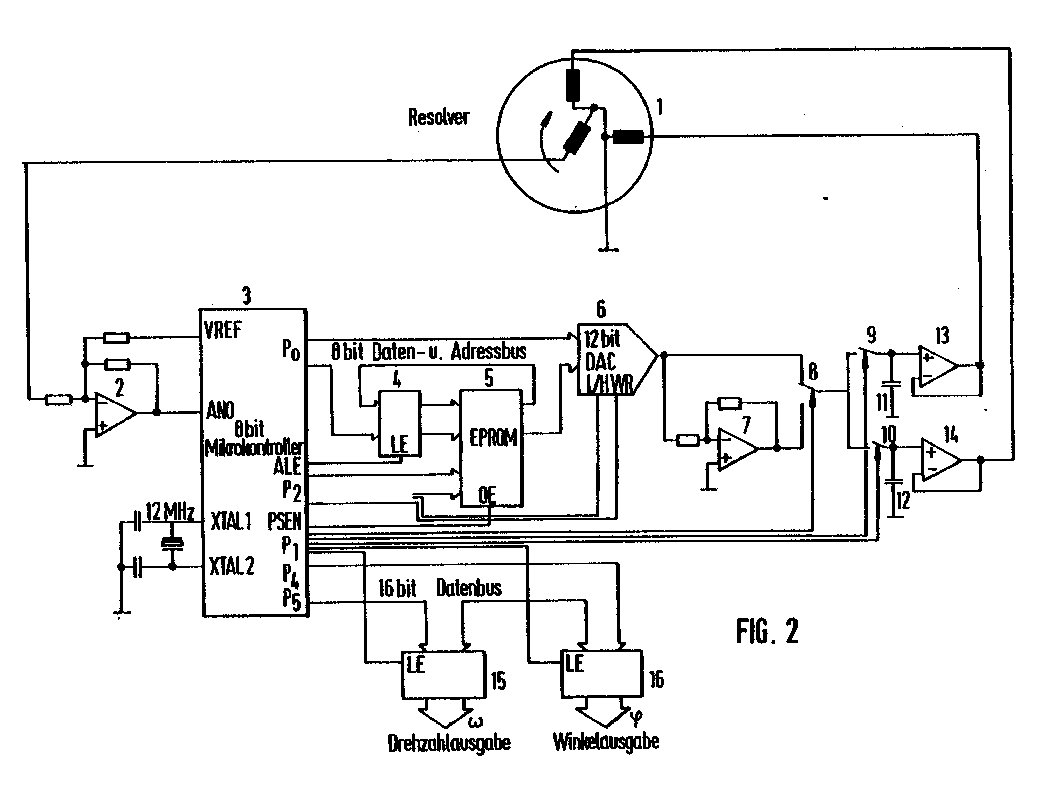

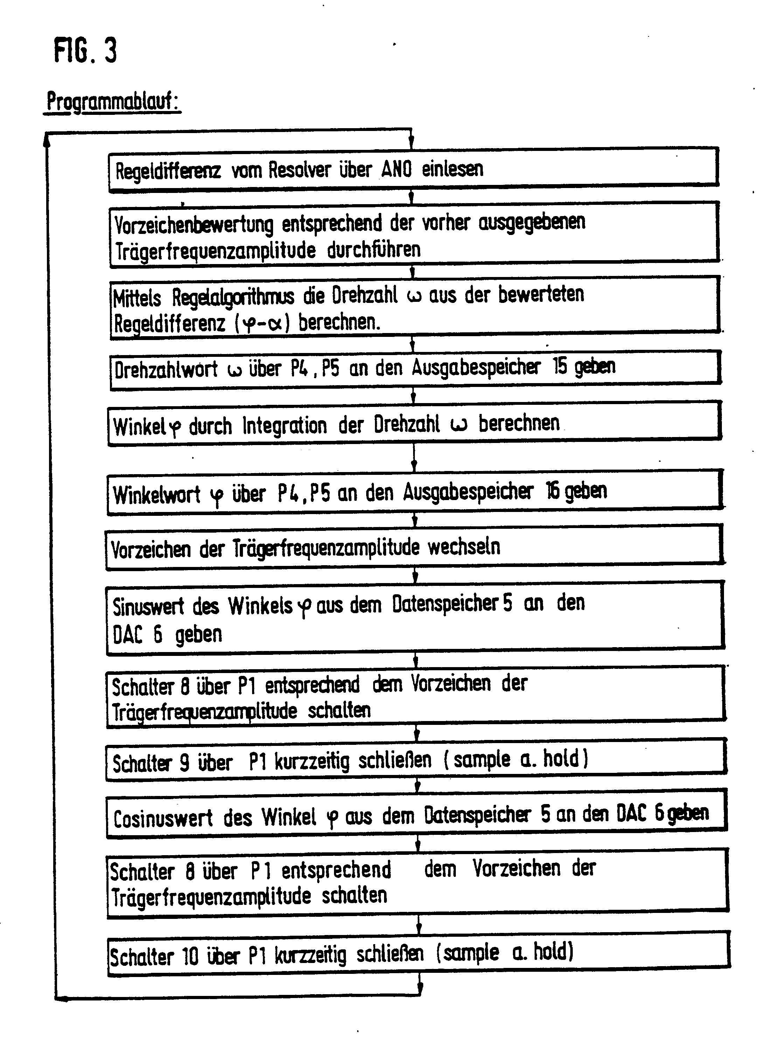

Fig. 2 zeigt einen Teil eines Kreissägeblattes 10', in welchem nur einzelne Dämpfungsstege 22, die zwischen zwei in radialer Richtung verlaufenden Durchgangsschlitzen 23 und 24 ausgebildet sind, vorgesehen sind. Einer der beiden Durchgangsschlitze 23 tangiert eine im Sägeblattkörper ausgebildete Durchgangsbohrung 19', in welche ein Niet 20' eingesetzt ist, der an dieser Stelle den Steg 22 in Fig. 2 nach links drückt und dadurch die Ränder des Schlitzes 24 auf der Höhe des Niets 20' in Dämpfungsanlage gegeneinander bringt. Die beiden Schlitze 23 und 24 enden auch hier im Sägeblattkörper und münden an ihren Enden in Bohrungen 21'.

Die dünnen Durchgangsschlitze, welche die Dämpfungsstege begrenzen, können auch stärker gekrümmt und bereichsweise auch in Umfangsrichtung des Kreissägeblattes verlaufen, und es können auch mehrere Niete 20, 20' auf einen gebildeten Dämpfungssteg als Spreizkörper einwirken. Die Durchgangsschlitze können auch mäanderförmig verlaufen.

## Ansprüche

1. Kreissägeblatt mit entlang seines Außenrandes ausgebildeten Zähnen, dadurch gekennzeichnet, daß im Sägeblattkörper (10, 10') durch benachbarte und mittels Laserstrahl erzeugte schmale Durchgangsschlitze (14-16, 23-24) Stege (17, 18, 22) gebildet sind, die mittels mindestens eines Spreizkörpers (20, 20') bereichsweise in gegenseitige Anlage oder Anlage gegen den angrenzenden Sägeblattkörperbereich gezwungen sind.

2. Kreissägeblatt nach Anspruch 1, dadurch gekennzeichnet, daß die Durchgangsschlitze (14-16, 23-24) sich jeweils über einen Radialbereich (A) des Sägeblattkörpers (10) erstrecken und im Sägeblattkörper enden.

3. Kreissägeblatt nach Anspruch 1 oder 2, dadurch gekennzeichnet, daß als Spreizkörper jeweils in eine Durchgangsöffnung (19, 19') eingesetze Niete (20, 20') dienen.

4. Kreissägeblatt nach einem der Ansprüche 1 bis 3, dadurch gekennzeichnet, daß der Spreizkörper (20) in eine in einem zwischen anderen Durchgangsschlitzen (14, 16) liegenden Schlitz (15) ausgebildete Öffnung (19) eingesetzt ist.

5. Kreissägeblatt nach einem der Ansprüche 1 bis 3, dadurch gekennzeichnet, daß der Spreizkörper (20') in eine Öffnung (19') eingesetzt ist, die einen der beiden einen Steg (22) begrenzenden Durchgangsschlitze (23, 24) tangiert.

6. Kreissägeblatt nach einem der Ansprüche 1 bis 5, dadurch gekennzeichnet, daß die Stege (17, 18, 22) und Spreizkörper (20, 20') einzeln oder zu Gruppen in gleichen Abmessungen und gleichmäßig über den Umfang des Sägeblattkörpers (10, 10') verteilt angeordnet sind.

*Fig.1*

*Fig.2*

FIG. 2

Resolver

VREF
$P_0$
8 bit Daten- u. Adressbus
12 bit DAC L/HWR
$AN0$
8 bit Mikrokontroller
LE
EPROM
ALE
$P_2$
OE
12 MHz
XTAL1 PSEN
$P_1$
XTAL2
$P_4$
$P_5$
16 bit Datenbus
LE
LE
$\omega$
$\varphi$
Drehzahlausgabe
Winkelausgabe

EP 0 369 120 A1

# FIG. 3

Programmablauf:

```
┌─────────────────────────────────────────────────────────────────┐
│ ┌─────────────────────────────────────────────────────────────┐ │
│ │ Regeldifferenz vom Resolver über AN0 einlesen               │ │
│ └─────────────────────────────────────────────────────────────┘ │
│                              │                                    │
│ ┌─────────────────────────────────────────────────────────────┐ │
│ │ Vorzeichenbewertung entsprechend der vorher ausgegebenen    │ │
│ │ Trägerfrequenzamplitude durchführen                          │ │
│ └─────────────────────────────────────────────────────────────┘ │
│                              │                                    │
│ ┌─────────────────────────────────────────────────────────────┐ │
│ │ Mittels Regelalgorithmus die Drehzahl ω aus der bewerteten  │ │
│ │ Regeldifferenz (φ-α) berechnen.                              │ │
│ └─────────────────────────────────────────────────────────────┘ │
│                              │                                    │
│ ┌─────────────────────────────────────────────────────────────┐ │
│ │ Drehzahlwort ω über P4,P5 an den Ausgabespeicher 15 geben   │ │
│ └─────────────────────────────────────────────────────────────┘ │
│                              │                                    │
│ ┌─────────────────────────────────────────────────────────────┐ │
│ │ Winkel φ durch Integration der Drehzahl ω berechnen          │ │
│ └─────────────────────────────────────────────────────────────┘ │
│                              │                                    │
│ ┌─────────────────────────────────────────────────────────────┐ │
│ │ Winkelwort φ über P4,P5 an den Ausgabespeicher 16 geben     │ │
│ └─────────────────────────────────────────────────────────────┘ │
│                              │                                    │
│ ┌─────────────────────────────────────────────────────────────┐ │
│ │ Vorzeichen der Trägerfrequenzamplitude wechseln             │ │
│ └─────────────────────────────────────────────────────────────┘ │
│                              │                                    │
│ ┌─────────────────────────────────────────────────────────────┐ │
│ │ Sinuswert des Winkels φ aus dem Datenspeicher 5 an den      │ │
│ │ DAC 6 geben                                                  │ │
│ └─────────────────────────────────────────────────────────────┘ │
│                              │                                    │
│ ┌─────────────────────────────────────────────────────────────┐ │
│ │ Schalter 8 über P1 entsprechend dem Vorzeichen der          │ │
│ │ Trägerfrequenzamplitude schalten                             │ │
│ └─────────────────────────────────────────────────────────────┘ │
│                              │                                    │
│ ┌─────────────────────────────────────────────────────────────┐ │
│ │ Schalter 9 über P1 kurzzeitig schließen (sample a. hold)    │ │
│ └─────────────────────────────────────────────────────────────┘ │
│                              │                                    │
│ ┌─────────────────────────────────────────────────────────────┐ │
│ │ Cosinuswert des Winkel φ aus dem Datenspeicher 5 an den DAC 6 geben │ │
│ └─────────────────────────────────────────────────────────────┘ │
│                              │                                    │
│ ┌─────────────────────────────────────────────────────────────┐ │
│ │ Schalter 8 über P1 entsprechend    dem Vorzeichen der       │ │
│ │ Trägerfrequenzamplitude schalten                             │ │
│ └─────────────────────────────────────────────────────────────┘ │
│                              │                                    │
│ ┌─────────────────────────────────────────────────────────────┐ │
│ │ Schalter 10 über P1 kurzzeitig schließen (sample a. hold)   │ │
│ └─────────────────────────────────────────────────────────────┘ │
│                              │                                    │
└──────────────────────────────────────────────────────────────────┘
```

## EINSCHLÄGIGE DOKUMENTE

EP 89114953.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.x 5 |
|---|---|---|---|
| A | <u>DE - A1 - 3 346 321</u> (MUMMENHOFF) * Gesamt * | 1,2 | B 23 D 61/02 |
| A | <u>DE - A1 - 3 611 207</u> (VOLKENBORN) * Gesamt * | 1,2 | |

RECHERCHIERTE
SACHGEBIETE (Int. Cl.4)

B 23 D 61/00

Der vorliegende Recherchenbericht wurde für alle Patentansprüche erstellt.

| Recherchenort | Abschlußdatum der Recherche | Prüfer |
|---|---|---|
| WIEN | 15-12-1989 | KRUMPSCHMID |